# EUROPEAN PATENT SPECIFICATION

(11) **EP 4 530 712 B1**
(45) Date of publication and mention of the grant of the patent: **07.10.2026**
(21) Application number: 24202997.3
(22) Date of filing: 26.09.2024
(51) Int. Cl.: G02F 1/225

(54) **OPTICAL WAVEGUIDE DEVICE, AND OPTICAL MODULATION DEVICE AND OPTICAL TRANSMISSION APPARATUS USING SAME**
OPTISCHE WELLENLEITERVORRICHTUNG UND OPTISCHE MODULATIONSVORRICHTUNG UND OPTISCHE ÜBERTRAGUNGSVORRICHTUNG DAMIT
DISPOSITIF DE GUIDE D'ONDES OPTIQUE, ET DISPOSITIF DE MODULATION OPTIQUE ET APPAREIL DE TRANSMISSION OPTIQUE L'UTILISANT

(30) Priority: 27.09.2023 JP 2023166332
(43) Date of publication of application: 02.04.2025
(73) Proprietor: Sumitomo Osaka Cement Co., Ltd., Tokyo, 105-8641 (JP)
(72) Inventor: KATAOKA, Yu, Tokyo, 105-8641 (JP); OKAHASHI, Kosuke, Tokyo, 105-8641 (JP)
(74) Representative: Sonnenberg Harrison Partnerschaft mbB

(56) References cited:
- CN-A- 116 113 872
- US-A1- 2021 157 177

## Description

This application claims priority of the Japanese application JP 2023-166332, filed on 27 September.

### BACKGROUND OF THE INVENTION

### Field of the Invention

The present invention relates to an optical waveguide device, and an optical modulation device and an optical transmission apparatus using the same, and particularly to an optical waveguide device including a substrate, an optical waveguide of a rib type formed on the substrate, and modulation electrodes disposed on the substrate to interpose the optical waveguide of the rib type.

### Description of Related Art

In the field of optical communication or in the field of optical measurement, an optical waveguide device, such as an optical modulator, in which an optical waveguide is formed on a substrate has been widely used. In recent years, in the optical modulator that is included in a transmitter built in an optical transmission and reception apparatus, it has been required to miniaturize the optical waveguide device constituting the optical modulator in order to fulfill requirements of size reduction and low power consumption.

In a case in which a support substrate with a low dielectric constant is used for an optical waveguide device (chip) in order to widen a bandwidth of the optical modulator, it is difficult to achieve impedance matching or velocity matching (velocity matching between a light wave propagating through the optical waveguide and a microwave as the modulation signal) in a coplanar electrode.

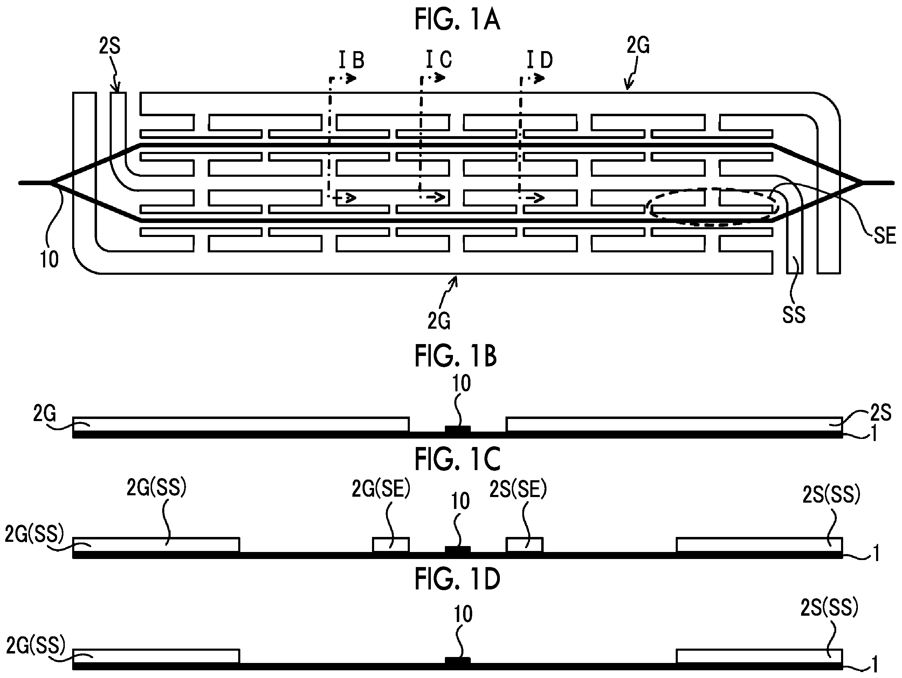

As shown in Japanese Patent No. 6075576, for example, the number of adjustable parameters is increased by using a segment electrode SE as shown in FIGS. 1A to 1D. However, it is difficult to adjust an electrode thickness to be thicker, which is effective for widening the bandwidth. On the contrary, in a case in which the segment electrode SE is formed in a T-shape, an electrode width is narrowed, resulting in a high aspect ratio (ratio of the electrode thickness to the electrode width), which makes manufacturing more difficult. In addition, in Japanese Patent No. 6075576, only a ground electrode is formed with the segment electrode, and the configuration is different from the configuration in FIG. 1 in which the segment electrode is provided in both a signal electrode and the ground electrode.

FIG. 1A is a plan view of an optical waveguide device and shows a shape of modulation electrodes disposed in the vicinity of an optical waveguide 10, specifically, a signal electrode 2S and a ground electrode 2G constituting the modulation electrode. The signal electrode 2S or the ground electrode 2G have a plurality of segment electrodes SE ("T-shape" portion) in proximity to the optical waveguide 10 and along the optical waveguide 10. Further, a signal transmission portion SS electrically connected to each segment electrode SE is provided.

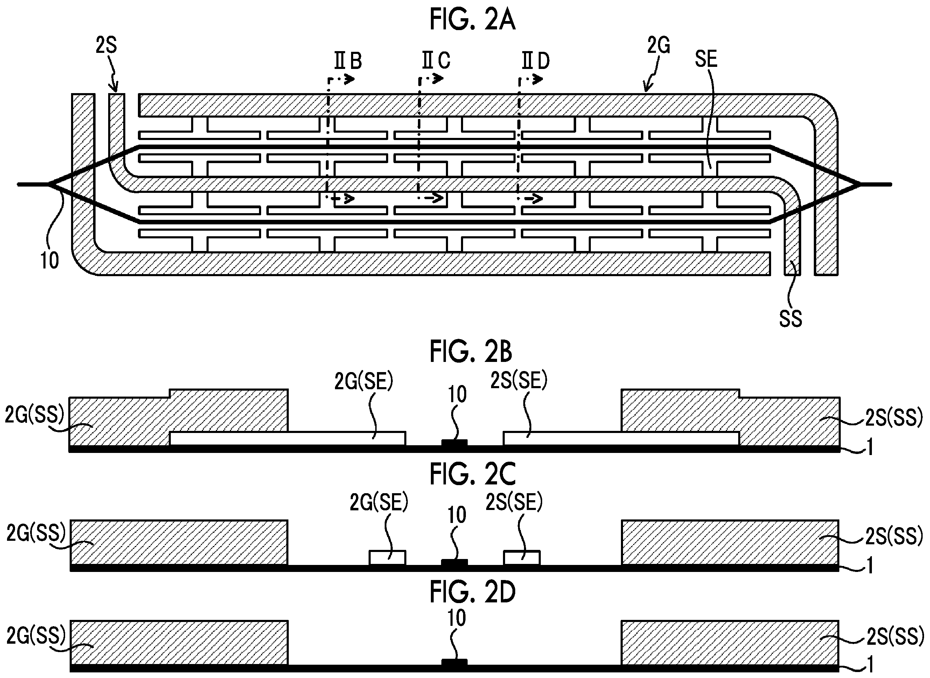

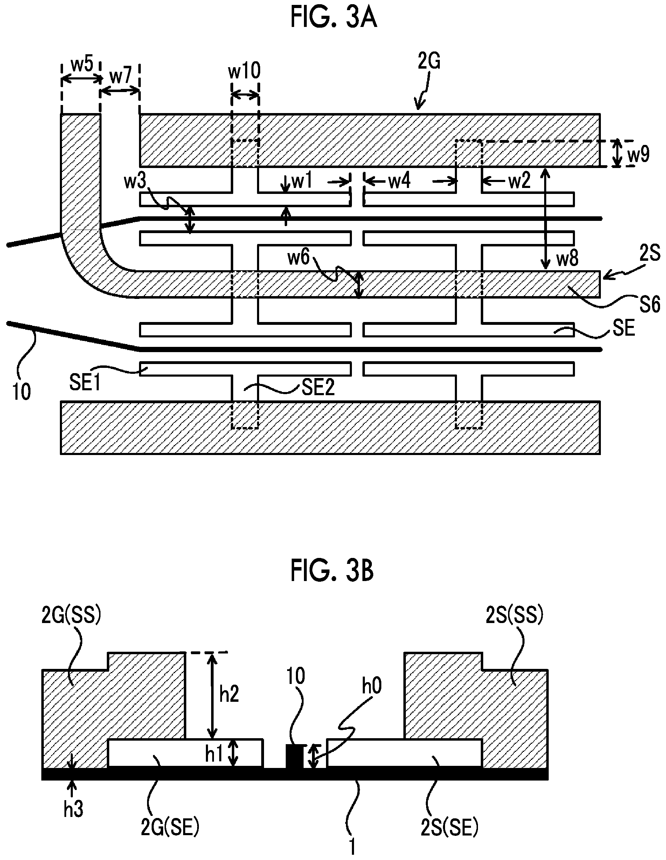

FIG. 1B is a cross-sectional view taken along an alternate long and short dash line IB of FIG. 1A. FIG. 1C is a cross-sectional view taken along an alternate long and short dash line IC of FIG. 1A. Further, FIG. 1D is a cross-sectional view taken along an alternate long and short dash line ID of FIG. 1A. The same applies to FIGS. 2A to 4, that is, FIGS. 2A, 3A, and 4 are plan views, and FIGS. 2B, 2C, 2D, 3B are cross-sectional views.

The optical waveguide 10 is an optical waveguide of a rib type formed on a substrate 1. In addition, since two ground electrodes 2G are disposed to interpose the signal electrode 2S, the modulation electrode in FIG. 1 constitutes the coplanar electrode. Further, in FIG. 1, since the segment electrode SE and the signal transmission portion SS are integrally formed in one pattern, it is difficult to form the electrode thickness thicker with the intention of impedance matching in the signal transmission portion SS as shown in FIGS. 1B and 1C.

In FIGS. 1B to 1D, the signal electrode 2S and the ground electrode 2G are directly formed on the substrate 1. This configuration contributes to a reduction in a drive voltage of the optical modulator since an electric field formed by the segment electrode SE is efficiently applied to the optical waveguide of the rib type.

However, at a position at which the signal electrode 2S or the ground electrode 2G of FIG. 1A intersects with the optical waveguide 10, the electrodes are disposed in contact with the optical waveguide 10 and cross the optical waveguide, and thus the light wave propagating through the optical waveguide is absorbed or scattered, resulting in an increase in a propagation loss of the signal. In order to address this issue, a configuration is usually adopted in which a buffer layer (not shown) is disposed on the optical waveguide and an electrode is disposed on the buffer layer.

On the other hand, considering the optical waveguide 10 and the segment electrodes disposed in the vicinity of the optical waveguide 10, as described above, in terms of the modulation efficiency, the electrodes are preferably formed directly on the substrate (which is a layer in which the optical waveguide is formed and is also referred to as a waveguide layer) 1 and formed in proximity to the optical waveguide. However, in order to suppress the scattering of light in the optical waveguide 10 during the light propagation, there is a conflicting issue that the buffer layer is also preferably formed on the optical waveguide 10.

Further, there is an issue in that a DC drift phenomenon is likely to occur in a case in which the electrodes are formed on the buffer layer. For example, in a lithium niobate (LN) modulator using LN as the substrate 1, the DC drift phenomenon caused by the buffer layer is a significant issue. The DC drift phenomenon is a phenomenon in which a bias point of a Mach-Zehnder modulator is changed by a DC voltage applied between the electrodes.

Moreover, in order for the bandwidth widening and the size reduction in the optical modulator, a configuration has been more frequently used in which a high-frequency electronic device is directly connected to the optical modulator, such as integrating a driver circuit that drives the optical modulator and an optical modulation element (optical waveguide device) to which an electrical signal from the driver circuit is applied in the same case to directly connect the driver circuit and the optical modulation element (optical waveguide device) to each other, or directly connecting a digital-to-analog converter (DAC) output of a signal processing processor to the optical modulator. In such a case, the output of the high-frequency electronic element is often DC coupled, and in this case, the optical modulator is likely to be affected by the DC drift phenomenon due to a DC component output from the high-frequency electronic device.

US 2021/157177 A1 discloses an optical device including a waveguide and an electrode. The waveguide includes at least one optical material having an electro-optic effect. The electrode includes a channel region and extensions protruding from the channel region. The extensions are closer to a portion of the waveguide than the channel region is.

CN 116 113 872 A discloses an optical waveguide element for preventing variations in electrical characteristics due to adhesion of impurities to an electrode without adversely affecting the degree of freedom of electrode design. The optical waveguide element comprises: a substrate; an optical waveguide formed on the substrate; an electrode that controls the light waves propagating through the optical waveguide; and a first insulating layer disposed between two adjacent electrodes among the electrodes, the height of the first insulating layer from the surface of the substrate being greater than the height of the two electrodes from the surface of the substrate.

### SUMMARY OF THE INVENTION

An object of the present invention is to address the above-described issues and is to provide an optical waveguide device that achieves impedance matching in modulation electrodes or velocity matching between a light wave propagating through an optical waveguide and a modulation signal and that is easily manufactured. Another object of the present invention is to provide an optical modulation device and an optical transmission apparatus using the optical waveguide device.

In the present invention, since the optical waveguide device includes the substrate, the optical waveguide of the rib type formed on the substrate, and the modulation electrodes disposed on the substrate to interpose the optical waveguide of the rib type, in which the modulation electrodes include the plurality of segment electrodes that are disposed in proximity to the optical waveguide of the rib type and that are disposed along the optical waveguide of the rib type, and the signal transmission portion that is electrically connected to the segment electrode and that transmits the modulation signal, the thickness of the signal transmission portion is larger than the thickness of the segment electrode, the buffer layer is disposed between the signal transmission portion and the optical waveguide of the rib type in at least a portion in which the signal transmission portion crosses the optical waveguide of the rib type, and the buffer layer is not disposed between the substrate and the segment electrode, the thickness of the segment electrode and the thickness of the signal transmission portion are different from each other, and thus the optical waveguide device that easily achieves the impedance matching or the velocity matching in the modulation electrode can be provided. In addition, since the segment electrode and the signal transmission portion are separately formed, a manufacturing method suitable for each component can be adopted, thereby facilitating the manufacturing of the optical waveguide device. Further, by using the optical waveguide device, the optical modulation device or the optical transmission apparatus with similarly excellent characteristics can be provided.

### BRIEF DESCRIPTION OF THE DRAWINGS

FIGS. 1A to 1D are views showing an example in which segment electrodes are provided on both a signal electrode and a ground electrode, in which FIG. 1A is a plan view and FIGS. 1B to 1D are cross-sectional views taken along alternate long and short dash lines IB, IC, and ID of FIG. 1A, respectively.
FIGS. 2A to 2D are views showing an example in which the segment electrode and a signal transmission portion are formed using different electrode layers.
FIGS. 3A and 3B are views showing a size of each portion related to the segment electrode, a signal transmission channel, or the like.
FIG. 4 is a view showing an application example of an electrical connection portion between the segment electrode and the signal transmission channel.
FIGS. 5A to 5D are views showing an example in which a buffer layer that covers an optical waveguide is partially formed.
FIGS. 6A to 6D are views showing an example in which a buffer layer that covers an entire surface of a substrate (with an opening portion in a part thereof) is formed.
FIGS. 7A and 7B are views showing an example in which a disposition pattern of the buffer layer disposed on the surface of the substrate is changed.
FIGS. 8A and 8B are views showing an example in which a shape pattern of the segment electrode is changed.
FIG. 9 is a view showing an optical transmission apparatus according to the present invention.

### DETAILED DESCRIPTION OF THE INVENTION

Hereinafter, the present invention will be described in detail using a preferred embodiment.

As shown in FIGS. 2A to 6D, the present invention relates to an optical waveguide device including a substrate 1, an optical waveguide 10 of a rib type formed on the substrate 1, and modulation electrodes (2S, 2G) disposed on the substrate to interpose the optical waveguide of the rib type, in which the modulation electrodes include a plurality of segment electrodes SE that are disposed in proximity to the optical waveguide of the rib type and that are disposed along the optical waveguide of the rib type, and a signal transmission portion SS that is electrically connected to the segment electrode and that transmits a modulation signal, a thickness of the signal transmission portion is larger than a thickness of the segment electrode, a buffer layer BF is disposed between the signal transmission portion SS and the optical waveguide 10 of the rib type in at least a portion in which the signal transmission portion crosses the optical waveguide of the rib type, and the buffer layer BF is not disposed between the substrate 1 and the segment electrode SE.

As the substrate used for the optical waveguide device, any substrate can be used as long as the substrate is a material that can form an optical waveguide, particularly an optical waveguide of a rib type. Specifically, as the substrate having an electro-optic effect, a substrate such as lithium niobate (LN), lithium tantalate (LT), or lead lanthanum zirconate titanate (PLZT), or a base material in which these substrate materials are doped with MgO or the like can be used. A film can also be formed by vapor-phase growing a material such as LN directly on a support substrate made of Si, glass, sapphire, or the like, or through some interlayer. A substrate obtained by bonding a substrate having the electro-optic effect to another substrate and then processing the electro-optic substrate into a thin film can also be used. Further, a semiconductor substrate, a substrate made of organic materials such as EO polymers, or a quartz substrate used for PLC can also be used. A different type of semiconductor film may be grown on the semiconductor substrate. Further, since the substrate (waveguide layer) on which the optical waveguide is formed is extremely thin, for example, 1 µm or lower, a support substrate having a dielectric constant lower than a dielectric constant of the waveguide layer is suitably used.

As a method of forming the optical waveguide, a portion having a high refractive index can be locally formed and used as the optical waveguide by using a method of thermally diffusing Ti or the like in the LN substrate, a proton exchange method, or the like. In the present invention, a portion of the substrate corresponding to the optical waveguide can be formed to have a protruding shape to be used as the optical waveguide of the rib type by, for example, etching the surface of the substrate other than the optical waveguide or forming grooves on both sides of the optical waveguide. The optical waveguide device according to the present invention is particularly effective for an optical waveguide of a step-index (SI) type such as the optical waveguide of the rib type having a point of discontinuity at which the refractive index is interrupted, rather than an optical waveguide of a graded-index (GI) type such as a diffused waveguide.

Hereinafter, an example will be mainly described in which an X-cut LN substrate is used as the substrate 1 and a height (h0 in FIG. 3B) of the optical waveguide of the rib type is set to 1 µm or lower.

The optical waveguide device according to the present invention has the following main features.
(1) The modulation electrodes include the plurality of segment electrodes that are disposed in proximity to the optical waveguide of the rib type and that are disposed along the optical waveguide of the rib type, and the signal transmission portion that is electrically connected to the segment electrode and that transmits the modulation signal.
(2) The thickness of the signal transmission portion is larger than the thickness of the segment electrode.
(3) The buffer layer is disposed between the signal transmission portion and the optical waveguide of the rib type in at least a portion in which the signal transmission portion crosses the optical waveguide of the rib type, and the buffer layer is not disposed between the substrate and the segment electrode.

In order to adopt the above-described features (1) to (3), it is preferable that the segment electrode SE and the signal transmission portion SS are formed using different electrode layers, as shown in FIGS. 2A to 2D. In the optical waveguide device according to the present invention, the configuration of the segment electrode SE and the signal transmission portion SS is adopted for both the signal electrode 2S and the ground electrode 2G constituting the modulation electrode.

In Japanese Patent No. 6075576, although an example is shown in which only the ground electrode has a structure of the segment electrode, as in the electrode in the related art in which the signal electrode does not include the segment electrode, a transmission portion has a rectangular cross section and the electrode thickness is also large, and the accuracy of the position or the dimension in the electrode formation cannot be fully ensured. Therefore, it is difficult to accurately dispose the signal electrode in proximity to the optical waveguide, and it is difficult to narrow the electrode clearance to lower the drive voltage.

FIGS. 3A and 3B are enlarged views of a part of the optical waveguide device shown in FIGS. 2A to 2D.

Since the segment electrode SE has a small imaging area and a critical accuracy of a position and a width with respect to the optical waveguide, a process that prioritizes the accuracy over a film thickness is suitable, and it is conceivable to apply direct imaging (DI) using an electron beam or the like. As a result, the electrode clearance (w3 in FIG. 3A) can be formed to be lower than 10 µm, which is narrower than the electrode clearance in the related art, and the electric field efficiency can be further improved.

On the contrary, by using a process in which a thick film is easily formed for the signal transmission portion SS, it is possible to form a high-frequency line with a large cross-sectional area and a low loss. In addition, as a degree of freedom in the thickness of the signal transmission portion increases, it is possible to design a clearance between two branched waveguides constituting a Mach-Zehnder optical waveguide to be narrower, which is advantageous for reducing a mounting area or suppressing the crosstalk of high-frequency signals.

Since the segment electrode SE and the signal transmission portion SS are formed separately, as described above, separate manufacturing processes can be used for the segment electrode and the signal transmission portion, and, for example, a thick film structure required for widening the bandwidth can be formed while suppressing the cost by using a plating method or the like only for the signal transmission portion SS. In addition, the segment electrode can be formed by prioritizing the accuracy, and the decrease in the drive voltage can also be simultaneously achieved.

For example, it is possible to use, as a light source used in a photolithography step, an electron beam (EB) for the segment electrode, and ultraviolet rays (UV) for the signal transmission portion.

As long as an absorption loss of light propagating through the optical waveguide 10 by the segment electrodes is not a problem, the drive voltage is lower as the clearance w3 between the segment electrode SE of the signal electrode (2S) and the segment electrode SE of the ground electrode (2G) is narrower. Similarly, since a region in which the electric field is applied to the optical waveguide is smaller as the clearance w3 between the segment electrodes is wider, it is preferable that the clearance w3 is narrowed as much as possible. As the width (w1, w2) of the electrode **pattern** itself can be made narrower, the number of options for available structural parameters is larger, and the degree of freedom in design is higher.

On the other hand, it is more difficult to form the photoresist for forming the electrode pattern as the aspect ratio between the thickness of the electrode and the line width of the electrode or the electrode clearance is larger. Therefore, it is difficult to set a ratio between the thickness of the electrode and the width or the clearance of the pattern to be formed to 2 or higher. Therefore, it is desirable that the width or the clearance of the narrowest pattern in the segment portion be at least 0.5 times the thickness of the electrode forming the segment portion. This can also be expressed by the following relational expression.
· Line width (w1, w2) of segment electrode/Thickness (h1) of segment electrode > 0.5
· Clearance (w3, w4) between segment electrodes/Thickness (h1) of segment electrode > 0.5
· Line width (w5, w6) of signal transmission portion/Thickness (h2) of electrode of signal transmission portion > 0.5
· Clearance (w7, w8) between signal transmission portions/Thickness (h2) of electrode of signal transmission portion > 0.5

In the optical waveguide device to which the present invention is applied, the electric field efficiency of the modulation electrode is increased, and a sufficient modulation operation can be achieved even in a case in which the length of the working portion (portion in which two branched waveguides of the Mach-Zehnder optical waveguide shown in FIGS. 2A to 2D are parallel to each other) is 20 µm or lower. Therefore, it is possible to reduce the size of the optical waveguide device (chip).

As in the signal line or the signal transmission portion, as the electrode thickness of the high-frequency line has a larger surface area, that is, is larger in a case in which the widths are the same, the propagation loss of the signal can be further suppressed. Setting the electrode thickness h2 of the signal transmission portion to be 10 µm or higher or to be at least 10 times the thickness h3 of the waveguide layer is difficult in a case in which the electrode is formed in a single layer as in the related art, but can be achieved by thickening only the signal transmission portion that does not use a fine pattern in the present invention.

In addition, the thickness of the segment electrode is not particularly limited from the terms of transmission characteristics. However, for the convenience of providing a connection point with the signal transmission portion, the thickness is required to the extent that the segment electrode is not lost even in a case in which the segment electrode is etched to some extent in a case of forming the electrode of the signal transmission portion. Specifically, it is desirable that the thickness h1 of the segment electrode is the thickness of 0.3 µm or higher. In addition, the thickness h2 of the electrode of the signal transmission portion can be set to be at least 5 times the thickness h1 of the segment electrode.

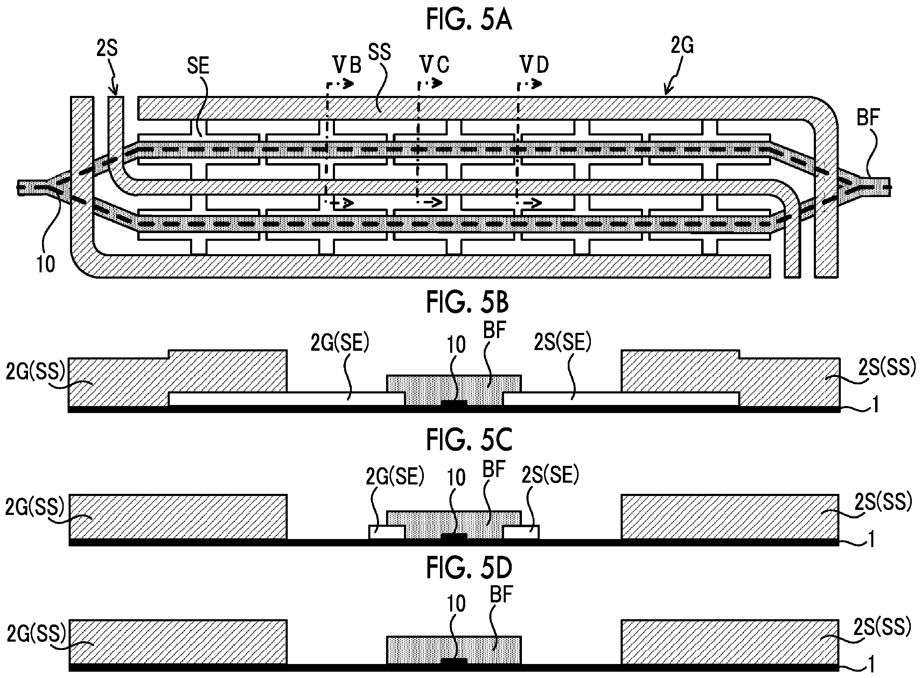

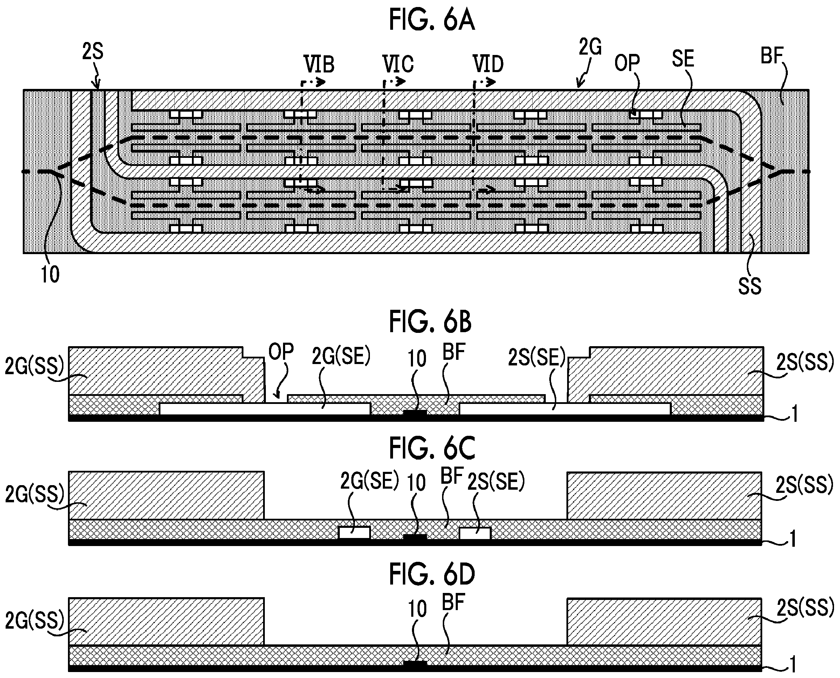

The segment electrode SE and the signal transmission portion SS need only be electrically connected at least partially. As shown in FIGS. 3A and 3B, a connection portion may be provided at a boundary of a portion in which the segment electrode SE and the signal transmission portion SS overlap. In a case in which the buffer layer BF is disposed on the upper side of the segment electrode SE, a configuration is adopted in which the buffer layer BF is not provided between the signal transmission portion SS and the segment electrode SE as shown in FIGS. 5A to 5D, or a configuration is adopted in which an opening portion OP is provided in a part of the buffer layer BF to achieve the electrical connection between the segment electrode and the signal transmission portion as shown in FIGS. 6A to 6D.

In addition, it is necessary to ensure a sufficient area (size) of the connection portion between the segment electrode and the signal transmission portion, taking into account the alignment accuracy of the signal transmission portion. Specifically, in a case in which an overlapping portion (w9, w10) between the segment electrode and the signal transmission portion is designed to be 5 µm or higher, a sufficient margin is obtained for the alignment accuracy of the lithography using the photomask, and defects such as poor contact can be eliminated.

In a case in which the buffer layer BF is provided between the segment electrode and the signal transmission portion, it is desirable that the opening portion OP of the buffer layer also has a width of 5 µm or higher for the same reason.

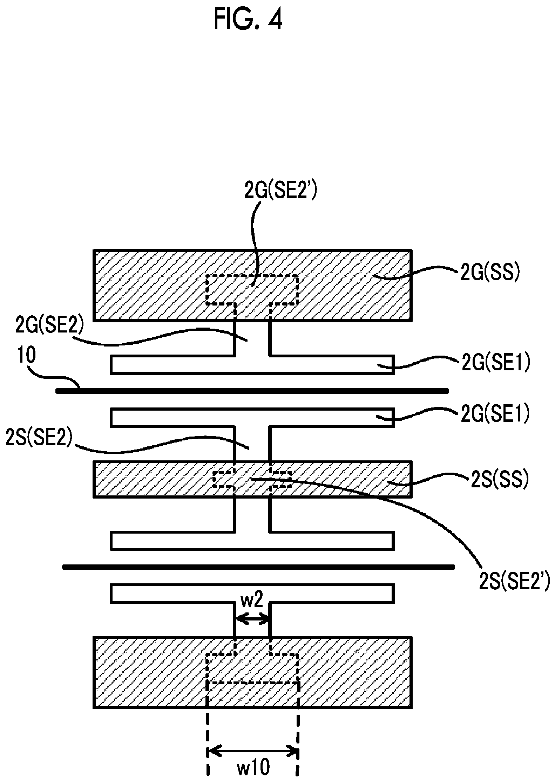

In addition, as shown in FIGS. 3A and 3B, the segment electrode SE includes, as an example, an electric field application portion SE1 that is disposed along the optical waveguide, and a power feeding portion SE2 that connects the electric field application portion SE1 and the signal transmission portion SS to each other. In a case in which it is desirable to have a narrower pattern width w2 of the power feeding portion SE2 in terms of characteristics, as shown in FIG. 4, it is also possible to set a width (maximum width) w10 of the power feeding portion SE2 (referred to as "portion A") located under the signal transmission portion SS to be larger than a width (maximum width) w2 of the power feeding portion SE2 (referred to as "portion B") not located under the signal transmission portion.

Different conductive materials may be used for the segment electrode and the signal transmission portion. For example, the material can be set such that the conductivity of the signal transmission portion is larger than the conductivity of the segment electrode. Specifically, a combination of gold (Au) for the segment electrode and copper (Cu) for the signal transmission portion or the like can be used. Cu is a material with high electrical conductivity and a low loss, but causes ion migration and has a risk of short-circuit. Therefore, in a case in which the segment electrode in which the electric field is concentrated is made of stable Au, it is possible to reduce the loss while avoiding migration. Alternatively, a combination of materials having different absorption rates of the propagating light may be used. For example, the material can be set such that the absorption rate of the segment electrode is smaller than the absorption rate of the signal transmission portion. More specifically, by making the segment electrode a transparent electric conductor (transparent electrode) to the propagating light, the electrode clearance w3 between the segment electrodes can be formed narrower, and the drive voltage can be lowered.

Next, a case will be described in which a step of forming the buffer layer is performed between a step of forming the segment electrode and a step of forming the signal transmission portion.

In FIGS. 2A to 2D, in a portion in which the optical waveguide 10 of the rib type and the modulation electrodes (signal electrode 2S and ground electrode 2G) overlap each other, the buffer layer (not shown) is disposed between the optical waveguide 10 of the rib type and the modulation electrodes. As a result, the absorption or scattering of the light propagating through the optical waveguide 10 by the modulation electrode can be suppressed.

FIGS. 5A to 5D show a case in which the buffer layer BF that covers the optical waveguide 10 of the rib type is formed. In a case in which the surface of the optical waveguide of the rib type is rough, the buffer layer BF can suppress the scattering of light propagating through the optical waveguide and can reduce the propagation loss.

In addition, as shown in FIGS. 5B and 5C, the configuration in which the buffer layer BF covers a part of the segment electrode SE also contributes to the prevention of the peeling of the segment electrode. Specifically, since the linear expansion coefficients are different between the segment electrode SE and the substrate 1, the peeling is likely to occur due to temperature changes. Therefore, it is possible to prevent the peeling of the segment electrode by using the adhesion strength between the buffer layer BF and the substrate 1.

As shown in FIG. 5C, a structure is adopted in which the buffer layer BF is not provided between the segment electrode (SE) and the substrate 1. Therefore, since the buffer layer is not provided on the substrate side between the electrodes in which the electric field generated in a case in which the DC voltage is applied to the electrodes is concentrated, the influence of the DC drift phenomenon can be significantly reduced as compared to the structure in which the buffer layer is disposed between the segment electrode and the substrate 1.

This is a more effective technique in a driver-integrated optical modulator in which a driver circuit with DC coupled output and an optical modulation element (optical waveguide device) are directly connected to each other.

FIGS. 6A to 6D show a case in which the buffer layer BF is formed on the entire surface of the substrate 1, and the opening portion OP of the buffer layer BF is formed in the portion in which the segment electrode SE and the signal transmission portion SS are electrically connected to each other.

The buffer layer BF is interposed between the signal transmission portion SS and the substrate 1 having a high dielectric constant, thereby achieving the low loss for the high-frequency signal that is the modulation signal. In addition, due to the convenience of forming the electrode on the LN substrate with a high dielectric constant, in a case in which the electrode is designed by prioritizing the drive voltage, the characteristic impedance is low in the electrode structure in the related art. In the present invention, since the electrode clearance between the signal transmission portions SS can be adjusted, a design that increases the impedance and further suppresses the reflection is possible.

In a case in which the buffer layer is disposed between the signal transmission portions, since the buffer layer covers the optical waveguide, there is an effect of suppressing the scattering of the propagating light in the optical waveguide.

In addition, from the viewpoint of the high-frequency signal, a configuration in which the buffer layer is provided only in the vicinity of the optical waveguide (including a part of the segment electrode) as shown in FIGS. 5A to 5D is a factor of signal attenuation as compared with a case in which the buffer layer is not provided at all. However, as shown in FIGS. 6A to 6D, disposing the signal transmission portion away from the LN substrate with a high dielectric constant contributes to the reduction of the signal attenuation.

As shown in FIGS. 6B and 6C, the buffer layer can be interposed between the segment electrode and the signal transmission portion. As a result, it is possible to achieve both dispositions of the segment electrode that is in direct contact with the waveguide layer (substrate 1) without creating a portion in which the buffer layer is interrupted on the optical waveguide and the signal transmission portion that crosses the optical waveguide through the buffer layer.

As a material of the buffer layer, a material that can be formed as a thin film and transmits infrared light can be used. A material with a small dielectric loss tangent can also suppress the degradation in high-frequency signal transmission characteristics. Specifically, ceramics such as SiO₂ and Al₂O₃, glass, optical resin, or the like can be used.

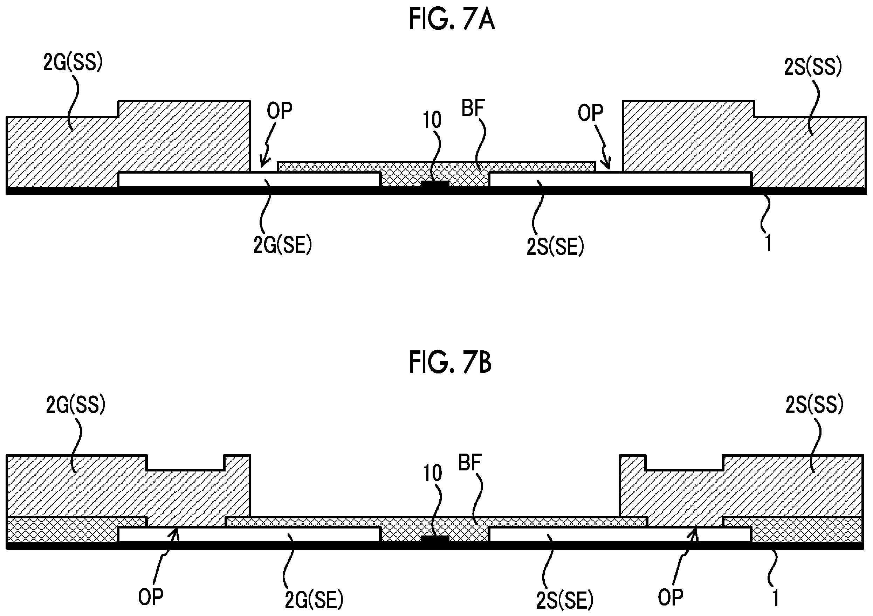

In a case in which the buffer layer is formed on the entire surface as shown in FIGS. 6A to 6D, the position at which the opening portion OP is formed is not limited to the examples of FIGS. 6A to 6D. It is also possible to form the opening portion OP on the entire lower portion (excluding a portion overlapping the optical waveguide) of the signal transmission portion SS as shown in FIG. 7A, or to form the opening portion OP on the lower portion of the signal transmission portion SS and only a part thereof as shown in FIG. 7B.

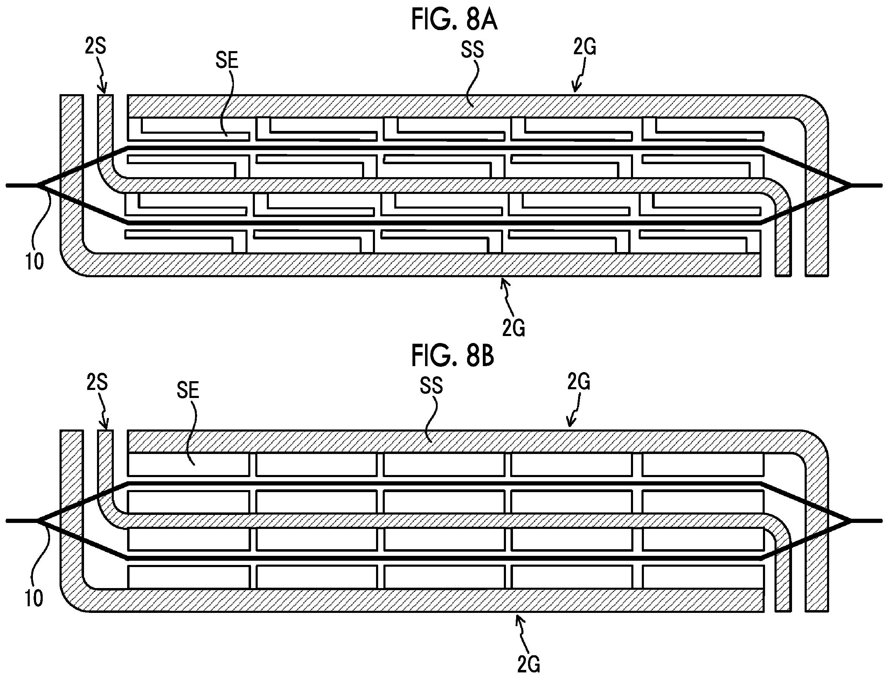

In addition, the shape of the segment electrode SE is not limited to the "T-shape" as shown in FIGS. 2A to 2D, and an "L-shape" as shown in FIG. 8A or a rectangular shape as shown in FIG. 8B can also be adopted.

The present invention can further be applied to a structure with a U-turn optical waveguide. With such a U-turn structure, the length of the working portion can be increased without changing the length of the optical waveguide device (chip), and there is an effect of lowering the drive voltage. In this case, it is advantageous to bend the U-turn waveguide as small as possible to suppress the total length of the line, reduce the signal loss, and save the mounting area.

In addition, it goes without saying that the present invention can be applied to an optical waveguide device in which a plurality of Mach-Zehnder optical waveguides are integrated in parallel, or a "nested" optical waveguide device in which the Mach-Zehnder optical waveguide is incorporated in a nested manner.

Next, an example will be described in which the optical waveguide device according to the present invention is applied to an optical modulation device or an optical transmission apparatus. Hereinafter, the optical modulation device using the optical waveguide device described above will be described. However, the present invention is not limited thereto and can also be applied to an optical phase modulator, an optical modulator having a polarization combining function, an optical waveguide device in which more Mach-Zehnder optical waveguides are integrated, a bonding device for an optical waveguide device made of other materials such as silicon, and a device for sensor applications. Further, it goes without saying that the present invention can be applied to a high bandwidth-coherent driver modulator (HB-CDM).

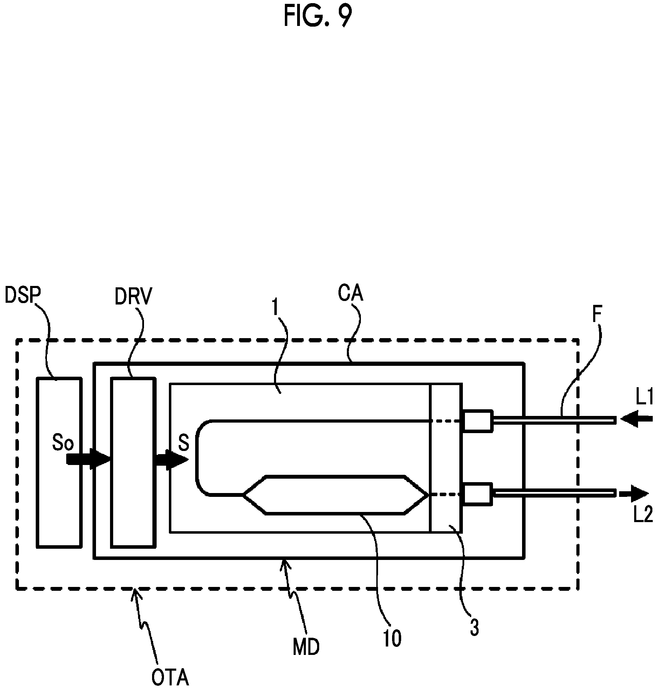

As shown in FIG. 9, the optical waveguide device includes the optical waveguide 10 formed on the substrate 1 and a modulation electrode (not shown) that modulates the light wave propagating through the optical waveguide 10, and is accommodated in a case CA. Further, an optical modulation device MD can be configured by providing the optical fiber (F) through which the light wave is input into the optical waveguide or output from the optical waveguide. In FIGS. 5A to 5D, the optical fiber F is optically coupled to the optical waveguide 10 in the optical waveguide device by using an optical block provided with an optical lens, a lens barrel, or the like. The present invention is not limited thereto, and the optical fiber may be introduced into the case through a through-hole penetrating a side wall of the case to directly bond the optical component or the substrate and the optical fiber to each other, or the optical fiber having a lens function at the end portion of the optical fiber may be optically coupled to the optical waveguide in the optical waveguide device. In addition, in order to stably perform bonding to the optical fiber or the optical block, a reinforcing member 3 can also be disposed along an end surface of the substrate 1.

An optical transmission apparatus OTA can be configured by connecting an electronic circuit (digital signal processor DSP) that outputs a modulation signal So to cause the optical modulation device MD to perform the modulation operation to the optical modulation device MD. In order to obtain the modulation signal S to be applied to the optical waveguide device, it is necessary to amplify the modulation signal So output from the digital signal processor DSP. Therefore, in FIGS. 5A to 5D, a driver circuit DRV is used to amplify the modulation signal. The driver circuit DRV or the digital signal processor DSP can be disposed outside the case CA, but can also be disposed inside the case CA. In particular, by disposing the driver circuit DRV inside the case, it is possible to further reduce the propagation loss of the modulation signal from the driver circuit.

In addition, in a case in which the driver circuit DRV and the modulation electrode are connected to each other by the DC coupling, the DC offset output of the driver circuit can be applied to the modulation electrode.

In the optical modulator having a structure in which the high-frequency electrode and the DC bias electrode are separated from each other, the signal is usually input using a DC-cut driver circuit. However, in a case of the driver-integrated modulator in which the driver circuit is disposed within the case, the demand for high-frequency performance and the element size reduction is stronger, and thus a DC coupling structure is adopted in which the DC bias electrode is not disposed, and the modulation electrode is directly connected is adopted. In this case, since the bias voltage is always input to the modulation electrode due to the output of the driver circuit, the influence of the DC drift phenomenon is significant.

In the optical modulation device and the optical transmission apparatus according to the present invention, since the segment electrode that contributes to the modulation can be formed directly on the substrate without passing through the buffer layer, it is possible to further reduce the DC drift phenomenon, making it suitable for a driver-integrated structure.

As described above, according to the present invention, it is possible to provide the optical waveguide device that achieves the impedance matching in the modulation electrodes or the velocity matching between the light wave propagating through the optical waveguide and the modulation signal and that is easily manufactured. Further, it is possible to provide the optical modulation device and the optical transmission apparatus using the optical waveguide device.

## Claims

1. An optical waveguide device comprising:
a substrate (1);
an optical waveguide (10) of a rib type formed on the substrate (1); and
modulation electrodes (2S, 2G) disposed on the substrate (1) to interpose the optical waveguide (10) of the rib type,
wherein the modulation electrodes (2S, 2G) include a plurality of segment electrodes (SE) that are disposed in proximity to the optical waveguide (10) of the rib type and that are disposed along the optical waveguide (10) of the rib type, and a signal transmission portion (SS) that is electrically connected to the segment electrode (SE) and that transmits a modulation signal,
a thickness of the signal transmission portion (SS) is larger than a thickness of the segment electrode (SE),
a buffer layer (BF) is disposed between the signal transmission portion (SS) and the optical waveguide (10) of the rib type in at least a portion in which the signal transmission portion (SS) crosses the optical waveguide (10) of the rib type,
the buffer layer (BF) is not disposed between the substrate (1) and the segment electrode (SE),
the buffer layer (BF) is disposed between the segment electrode (SE) and the signal transmission portion (SS), and
an opening portion (OP) for electrically connecting the segment electrode (SE) and the signal transmission portion (SS) to each other is formed in a part of the buffer layer (BF).

2. The optical waveguide device according to claim 1,
wherein the buffer layer (BF) that covers the optical waveguide (10) of the rib type is disposed to overlap the segment electrode (SE).

3. The optical waveguide device according to claim 1,
wherein the segment electrode (SE) includes an electric field application portion (SE1) that is disposed along the optical waveguide (10) of the rib type and a power feeding portion (SE2) that connects the electric field application portion (SE1) and the signal transmission portion (SS), and
the power feeding portion (SE2) includes a portion A which the signal transmission portion (SS) is disposed to overlap and a portion B which the signal transmission portion (SS) is not disposed to overlap, and
a maximum width (w10) of the portion A is larger than a maximum width (w2) of the portion B in a direction in which the signal transmission portion (SS) extends.

4. An optical modulation device comprising:
the optical waveguide device according to claim 1;
a case (CA) that accommodates the optical waveguide device; and
an optical fiber (F) through which a light wave is input to the optical waveguide (10) or output from the optical waveguide (10).

5. The optical modulation device according to claim 4,
wherein the optical waveguide device includes a modulation electrode (2S, 2G) for modulating a light wave propagating through the optical waveguide (10), and an electronic circuit (DRV) that amplifies a modulation signal to be input to the modulation electrode (2S, 2G) of the optical waveguide device is provided inside the case (CA).

6. An optical transmission apparatus comprising:
the optical modulation device according to claim 4; and
an electronic circuit (DSP) that outputs a modulation signal for causing the optical modulation device to perform a modulation operation.

## Patentansprüche

1. Optische Wellenleitervorrichtung, umfassend:
ein Substrat (1);
einen auf dem Substrat (1) ausgebildeten optischen Wellenleiter (10) vom Rippentyp; und
auf dem Substrat (1) angeordnete Modulationselektroden (2S, 2G), um den optischen Wellenleiter (10) vom Rippentyp dazwischen anzuordnen, wobei
die Modulationselektroden (2S, 2G) eine Vielzahl von Segmentelektroden (SE), die in der Nähe des optischen Wellenleiters (10) vom Rippentyp angeordnet sind und die entlang des optischen Wellenleiters (10) vom Rippentyp angeordnet sind, und einen elektrisch mit der Segmentelektrode (SE) verbundenen und ein Modulationssignal übertragenden Signalübertragungsabschnitt (SS) beinhaltet,
eine Dicke des Signalübertragungsabschnitts (SS) größer als eine Dicke der Segmentelektrode (SE) ist,
eine Pufferschicht (BF) zwischen dem Signalübertragungsabschnitt (SS) und dem optischen Wellenleiter (10) vom Rippentyp in mindestens einem Abschnitt angeordnet ist, in dem der Signalübertragungsabschnitt (SS) den optischen Wellenleiter (10) vom Rippentyp kreuzt,
die Pufferschicht (BF) nicht zwischen dem Substrat (1) und der Segmentelektrode (SE) angeordnet ist,
die Pufferschicht (BF) zwischen der Segmentelektrode (SE) und dem Signalübertragungsabschnitt (SS) angeordnet ist, und
ein Öffnungsabschnitt (OP) zum elektrischen Verbinden der Segmentelektrode (SE) und des Signalübertragungsabschnitts (SS) miteinander in einem Teil der Pufferschicht (BF) ausgebildet ist.

2. Optische Wellenleitervorrichtung nach Anspruch 1,
bei welcher die Pufferschicht (BF), die den optischen Wellenleiter (10) vom Rippentyp bedeckt, so angeordnet ist, dass sie die Segmentelektrode (SE) überlappt.

3. Optische Wellenleitervorrichtung nach Anspruch 1,
bei welcher die Segmentelektrode (SE) einen Anlegeabschnitt (SE1) für ein elektrisches Feld, der entlang des optischen Wellenleiters (10) vom Rippentyp angeordnet ist, und einen Leistungszuführungsabschnitt (SE2), der den Anlegeabschnitt (SE1) für ein elektrisches Feld und den Signalübertragungsabschnitt (SS) verbindet, beinhaltet, und
der Leistungszuführungsabschnitt (SE2) einen Abschnitt A, in dem der Signalübertragungsabschnitt (SS) so angeordnet ist, dass er überlappt, und einen Abschnitt B, in dem der Signalübertragungsabschnitt (SS) nicht so angeordnet ist, dass er überlappt, beinhaltet, und
eine maximale Breite (w10) des Abschnitts A größer als eine maximale Breite (w2) des Abschnitts B in einer Richtung, in der sich der Signalübertragungsabschnitt (SS) erstreckt, ist.

4. Optische Modulationsvorrichtung, umfassend:
die optische Wellenleitervorrichtung nach Anspruch 1;
ein Gehäuse (CA), das die optische Wellenleitervorrichtung aufnimmt; und
eine optische Faser (F), durch die eine Lichtwelle in den optischen Wellenleiter (10) eingegeben oder aus dem optischen Wellenleiter (10) ausgegeben wird.

5. Optische Modulationsvorrichtung nach Anspruch 4,
bei welcher die optische Wellenleitervorrichtung eine Modulationselektrode (2S, 2G) zum Modulieren einer Lichtwelle , die sich durch den optischen Wellenleiter (10) ausbreitet, und eine elektronische Schaltung (DRV), die ein Modulationssignal verstärkt, das in die Modulationselektrode (2S, 2G) der optischen Wellenleitervorrichtung eingegeben werden soll, innerhalb des Gehäuses (CA) vorgesehen ist, beinhaltet.

6. Optische Übertragungsvorrichtung, umfassend:
die optische Modulationsvorrichtung nach Anspruch 4; und
eine elektronische Schaltung (DSP), die ein Modulationssignal ausgibt, um die optische Modulationsvorrichtung zu veranlassen, einen Modulationsvorgang durchzuführen.

## Revendications

1. Dispositif de guide d'onde optique comprenant :
un substrat (1) ;
un guide d'onde optique (10) de type à nervure formé sur le substrat (1) ; et
des électrodes de modulation (2S, 2G) disposées sur le substrat (1) pour intercaler le guide d'onde optique (10) de type nervure,
dans lequel les électrodes de modulation (2S, 2G) comprennent une pluralité d'électrodes de segment (SE) disposées à proximité du guide d'onde optique (10) de type à nervure et disposées le long du guide d'onde optique (10) de type nervure, et une partie de transmission de signal (SS) connectée électriquement à l'électrode de segment (SE) et transmettant un signal de modulation,
une épaisseur de la partie de transmission de signal (SS) est supérieure à une épaisseur de l'électrode de segment (SE),
une couche tampon (BF) est disposée entre la partie de transmission de signal (SS) et le guide d'onde optique (10) de type à nervure dans au moins une partie dans laquelle la partie de transmission de signal (SS) croise le guide d'onde optique (10) de type nervure,
la couche tampon (BF) n'est pas disposée entre le substrat (1) et l'électrode de segment (SE),
la couche tampon (BF) est disposée entre l'électrode de segment (SE) et la partie de transmission de signal (SS), et
une partie d'ouverture (OP) pour connecter électriquement l'électrode de segment (SE) et la partie de transmission de signal (SS) l'une à l'autre est formée dans une partie de la couche tampon (BF).

2. Dispositif de guide d'onde optique selon la revendication 1,
dans lequel la couche tampon (BF) qui recouvre le guide d'onde optique (10) de type à nervure est disposée pour chevaucher l'électrode de segment (SE).

3. Dispositif de guide d'onde optique selon la revendication 1,
dans lequel l'électrode de segment (SE) comprend une partie d'application de champ électrique (SE1) disposée le long du guide d'onde optique (10) de type à nervure et une partie d'alimentation en énergie (SE2) connectant la partie d'application de champ électrique (SE1) et la partie de transmission de signal (SS), et
la partie d'alimentation en énergie (SE2) comprend une partie A que la partie de transmission de signal (SS) est disposée pour chevaucher et une partie B que la partie de transmission de signal (SS) n'est pas disposée pour chevaucher, et
une largeur maximale (w10) de la partie A est supérieure à une largeur maximale (w2) de la partie B dans une direction dans laquelle la partie de transmission de signal (SS) s'étend.

4. Dispositif de modulation optique comprenant :
le dispositif de guide d'onde optique selon la revendication 1 ;
un boîtier (CA) qui loge le dispositif de guide d'onde optique ; et
une fibre optique (F) à travers laquelle une onde lumineuse est injectée dans le guide d'onde optique (10) ou éjectée du guide d'onde optique (10).

5. Dispositif de modulation optique selon la revendication 4,
dans lequel le dispositif de guide d'onde optique comprend une électrode de modulation (2S, 2G) pour moduler une onde lumineuse se propageant à travers le guide d'onde optique (10), et un circuit électronique (DRV) amplifiant un signal de modulation qui doit être injecté dans l'électrode de modulation (2S, 2G) du dispositif de guide d'onde optique est prévu à l'intérieur du boîtier (CA).

6. Appareil de transmission optique comprenant :
le dispositif de modulation optique selon la revendication 4 ; et
un circuit électronique (DSP) qui fournit un signal de modulation pour amener le dispositif de modulation optique à effectuer une opération de modulation.
